# EUROPEAN PATENT SPECIFICATION

(11) **EP 3 612 477 B1**
(45) Date of publication and mention of the grant of the patent: **07.06.2023**
(21) Application number: 18788556.1
(22) Date of filing: 18.04.2018
(51) Int. Cl.: B65G 61/00, B65G 57/06, B65G 57/24, B25J 15/00, B65B 35/16

(54) **LAYER PICKING GRIPPER**
LAGENGREIFER
PINCE POUR COUCHES D'ARTICLES

(30) Priority: 18.04.2017 AU 2017901405
(43) Date of publication of application: 26.02.2020
(73) Proprietor: Robotic Automation Pty Limited, Silverwater BC, New South Wales 1811 (AU)
(72) Inventor: WELLS, Colin, Newington, New South Wales 2127 (AU)
(74) Representative: Cabinet Chaillot
(86) International application number: PCT/AU2018/050347
(87) International publication number: WO 2018/191778

(56) References cited:
- EP-A1- 2 899 149
- WO-A1-2014/090275
- DE-A1-102013 003 768
- FR-A1- 2 878 238
- US-A- 3 941 048
- US-A1- 2009 087 295
- US-A1- 2010 218 464
- US-A1- 2015 314 455

## Description

### TECHNICAL FIELD

The present invention relates to the palletising of packaged goods EG cartons, shrink or tray wrapped packaging & is especially relevant to shelf ready product packaging, more particularly although not exclusively, to automation equipment for the handling of any of the above products.

### BACKGROUND

The handling of goods from manufacture to warehousing and subsequently to distribution almost invariably involves the loading and unloading of pallets. "Shelf ready" cartons of product have become more and more important particularly in supermarkets. A problem of handling some packaging / cartons of product stems from the fact that many cartons cannot be gripped from the top or sides, but only from underneath due to the nature of tear away shelf ready cartons or tray type carton packaging with a completely open top & sometimes sides.

So called Tyne Style grippers are known which are provided with a load bearing block activated by an air cylinder or servo motor projecting from rear of the gripper. This arrangement however more than doubles the depth of the gripper demanding an increase in footprint of system size and an increase in the pitch between pallets. Moreover, these type of grippers require tynes which are required to fit in between the rollers of an incoming pick off station, and are easily damaged & not suitable for many products that would run better on a belt type surface.

FR2878238A1 discloses a layer picking gripper according to the preamble of claim 1.

It is an object of the present invention to address or at least ameliorate some of the above disadvantages.

### Notes

The term "comprising" (and grammatical variations thereof) is used in this specification in the inclusive sense of "having" or "including", and not in the exclusive sense of "consisting only of".

### SUMMARY OF INVENTION

Accordingly, the invention provides a gripper device as defined in the independent claim, with preferred features being defined by the dependent claims.

There is provided a gripper for handling one or more cartons of products; the gripper including at least one gripper assembly; each assembly comprising a vertical fixed clamping plate and a vertical articulated clamping plate; the articulated clamping plate operable between a fully open position and a clamping position; the assembly further including a retractor plate; the retractor plate operable between a first retracted position in which it is in a vertical position and a second extended position in which it is in a horizontal position; the gripper assembly further includes a housing; a vertical surface of the housing facing the articulated clamping plate forming the fixed plate.

Preferably, the housing contains a retracting and extending mechanism for retracting and extending the retractor plate between the first vertical position within the housing and the second horizontal position projecting from the housing.

Preferably, the retractor plate comprises an assembly of hinge elements along opposing opposite sides of the retractor plate; the hinge elements including overlapping structures arranged to limit relative rotation between adjacent hinge elements between a vertical position and a horizontal position.

Preferably, each hinge element incorporates a link of a chain; the links engaging sequentially with driven sprockets located within the housing.

Preferably, corresponding opposing hinge elements are interconnected by connecting elements to form a platform when the retractor plate is in the horizontal position.

Preferably, activation of the driven sprockets in a retraction process draws the links of each chain and the overlapping elements into vertical grooves provided within the housing.

Preferably, the articulated clamping plate is movably mounted to a slide assembly extending from an upper portion of the housing; an actuator mounted to the slide assembly moving the articulated clamping plate between the fully open position and the clamping position.

Preferably, the gripper assembly is an end effector of a robot.

Preferably, in use, in the extended position, the retractor plate is positioned proximate the one or more cartons of product to be lifted such that an upper surface of the extender plate is coincident with an underside of the one or more cartons of product.

Preferably, the gripper comprises two gripper assemblies; each gripper assembly supported side by side from a supporting structure; the supporting structure including a robot mount for connecting the gripper to an arm of a robot.

Preferably, each gripper assembly is rotatably mounted to the supporting structure; actuators at each gripper assembly operable to rotate each gripper assembly about a vertical axis.

### BRIEF DESCRIPTION OF DRAWINGS

Embodiments of the present invention will now be described with reference to the accompanying drawings wherein:
Figure 1 is a perspective view of a gripper assembly according to the invention;
Figure 2 is a further perspective view of the gripper assembly of Figure 1 with a articulated clamping plate in a retracted position;
Figure 3 is another perspective view of the gripper assembly of Figures 1 and 2 with a retractor plate in a retracted position,
Figure 4 is a perspective view from below of the gripper assembly of Figures 1 to 3;
Figures 5 and 5A are perspective views of a sub-assembly of the gripper assembly of Figures 1 to 4;
Figure 6 is a side view of the gripper assembly of Figures 1 to 4 attached to the arm of a robot for use,

### DESCRIPTION OF EMBODIMENTS

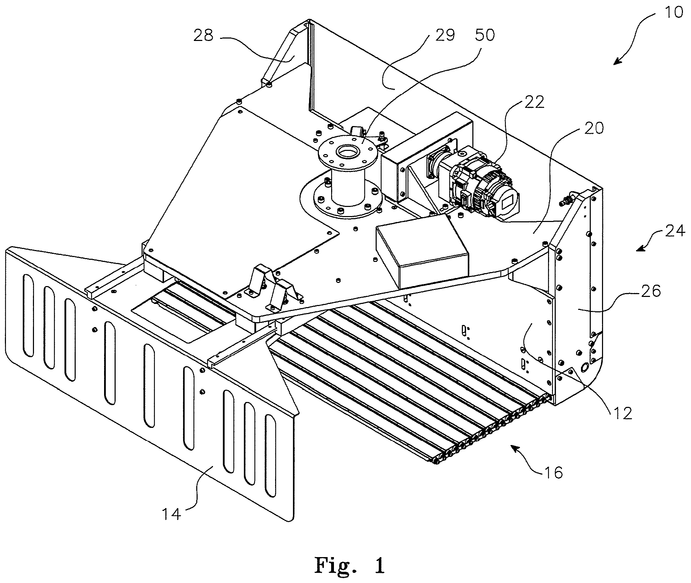

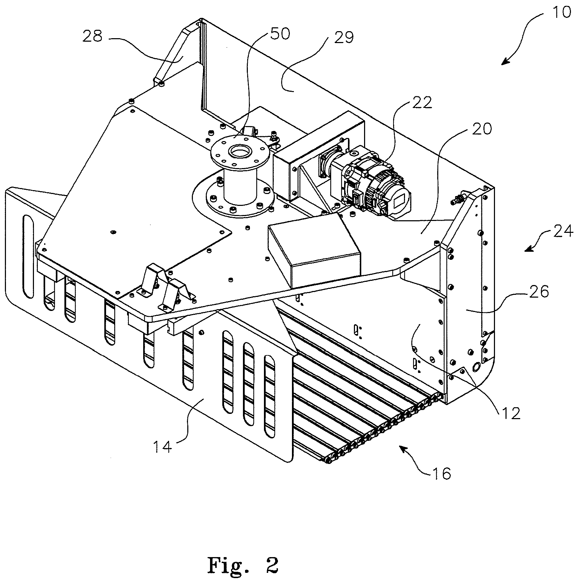

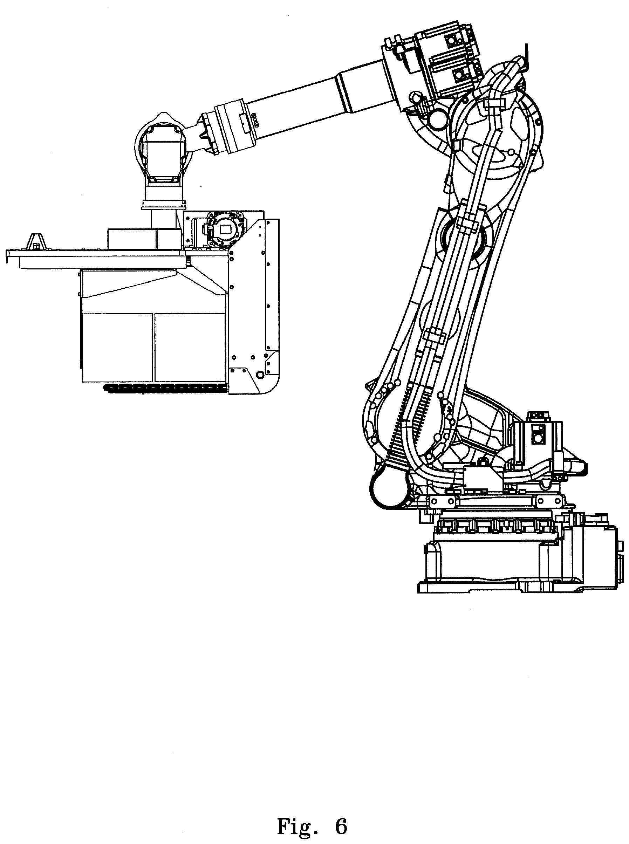

With reference to Figures 1 to 6, a layer picking gripper according to the invention, for handling one or more cartons of products, includes at least one gripper assembly **10.** Each assembly comprising a vertical fixed clamping plate **12** and a vertical articulated clamping plate **14.** The articulated clamping plate **14** is operable between a fully open position, as shown in Figure 1, and a clamping position as shown in Figure 2.

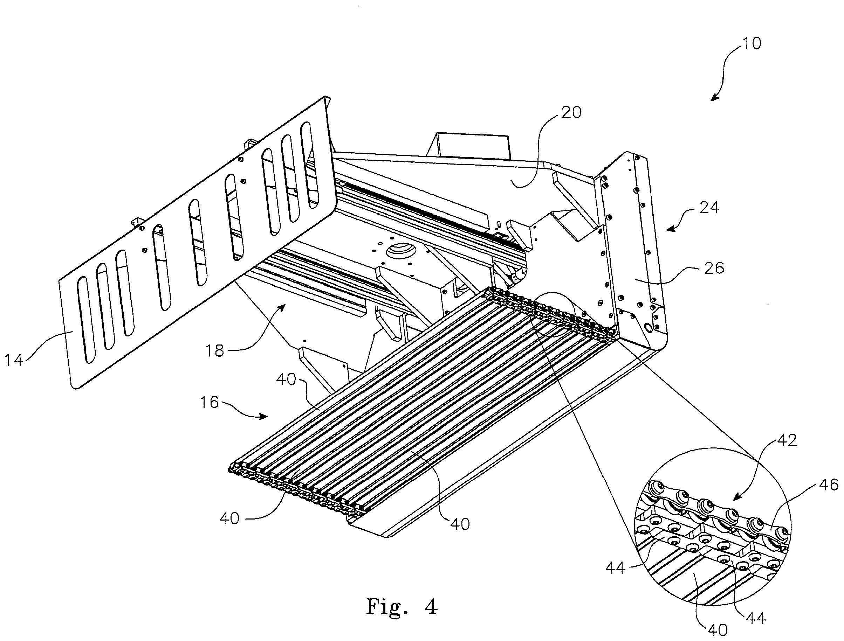

As best seen in Figure 4, the vertical articulated clamping plate **14** is mounted to a slide system **18** at the underside of a main support plate **20.** A rotary actuator **22** mounted to the top of the main support plate **20** drives the slide system **18** and the articulated clamping plate **14** between the fully open position of Figure 1 and the clamping position of Figure 2.

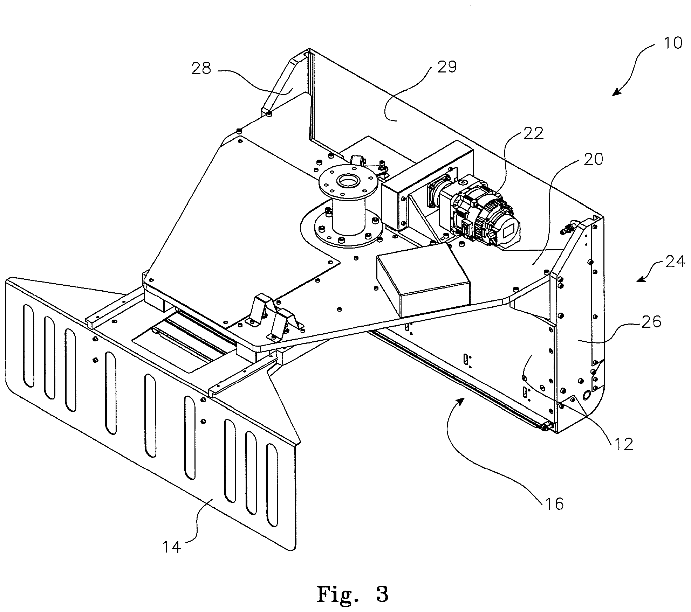

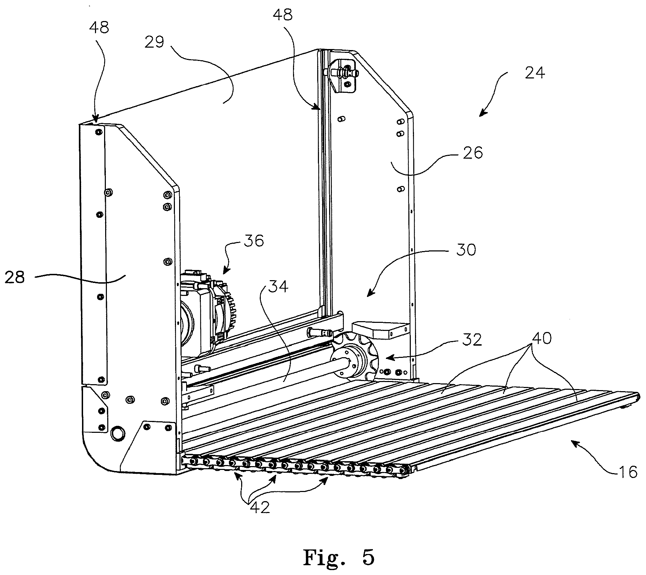

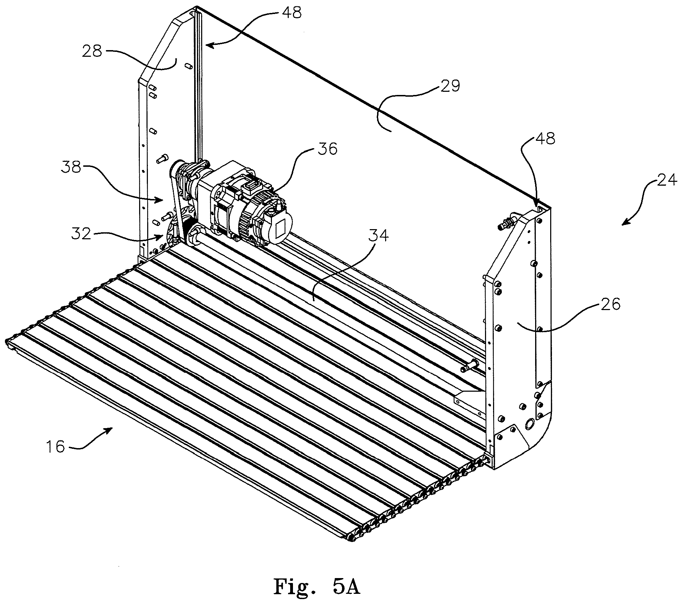

The assembly further including a retractor plate **16** which is operable between a first retracted position as shown in Figure 3 and a second extended position as shown in each of the other figures. The retractor plate **22** in the first retracted position of Figure 3, is retained within a housing **24,** supported from the main support plate **20.** In the second position, the retractor plate **16** is in the projecting horizontal position of Figure 1, 2 and Figures 4 to 7. With particular reference to Figures 5 and 5A, the sub assembly of the housing **24,** comprising side plates **26** and **28** and cover plate **29,** includes a sprocket drive system **30,** comprising of a pair of sprockets **32** (only one of which is visible in Figure 5) interconnected by drive shaft **34,** and driven into rotation by rotary actuator **36** via a drive belt and pulley system **38.**

As best seen in the inset view of Figure 4, the retractor plate **16** is made up of a number of plate elements **40** interlinked by hinge elements **42** along opposing opposite sides of the retractor plate. The hinge elements **42** incorporate overlapping structures **44** arranged to limit rotation of adjacent hinge elements between a vertical position and a horizontal position. Each hinge element **42** further incorporate a link **46** of chains extending along each opposite side of the retractor plate **24.** The links **46** engage sequentially with the driven sprockets **32** located within the housing **24** as seen in Figures 5 and 5A.

Referring again to Figures 5 and 5A, each inward facing surface of the side plates **26,28** of the housing **24** is provided with a groove **48,** comprising a curved section (hidden by the sprockets **32**) concentric with the sprockets **32,** and a vertical section, adapted to accept the chain links **46** and the overlapping structures **44** as a sliding fit. As the actuator **36** is activated in a retraction process, the driven sprockets **32** draw the links **46** of each chain together with the overlapping structures **44** into the grooves **48** to retract the retractor plate **16** into the housing **24.**

The gripper assembly **10** is provided with a connector element **50** mounted to the main support plate **20.** In a single gripper assembly mode of operation, the gripper assembly is attached to an arm of an industrial robot **52,** becoming an end effector of the robot.

Alternatively, a pair of gripper assemblies **10** may be supported from a bridging structure with the connector elements **50** of each assembly rotatably connected to the bridging structure and the bridging structure in turn connected to the robot's arm. In this second dual configuration, one or each of the gripper assemblies may be rotated through 90degrees to suit various carton orientation layers. Also in this dual arrangement, one of the gripper assemblies in modified in that the clamping plate is removed or at least has no vertical component. The bridging structure has provision for moving one of the dual mountings relative the other, thus allowing that gripper assembly at 90degrees to the other, to act as a clamp, drawing some cartons of a layer of cartons against those retained in the other gripper assembly.

Thus in use, the single gripper assembly or the dual gripper assembly, manipulate by the robot, can be used to pick a layer of shelf ready cartons of product from a pick off station, either a carton loading conveyor, or from a pallet of stacked cartons. In a picking sequence, the or each gripper assembly is initially in a state in which the articulated clamping plate **14** is in the fully extended position and the retractor plate **16** retracted. The robot may lower the gripper assembly over the layer of cartons, or the layer may have been transported by conveyor to a position between the clamping plate **14** and the fixed plate **12.** The retractor plate **16** is then extended and place up against the pick off station. When the product ready signal is received by the robot, the clamping plate **14** draws the cartons onto the retractor plate and the robot then moves to place the collected cartons to a deposit location. To deposit, the retractor plate is retracted, and the clamping plate eased to release the cartons, with the robot retreating for a following cycle.

A major advantage over known layer picking grippers lies in the unique retractor plate. By retracting the retractor plate into the vertical housing, the space required for operating the gripper assembly, both in single gripper and dual gripper assembly mode reduced, thus allowing a closer spacing of pallets in a layer picking operation.

## Claims

1. A layer picking gripper for handling one or more cartons of products; the gripper including at least one gripper assembly (10); each assembly (10) comprising a vertical fixed clamping plate (12) and a vertical articulated clamping plate (14); the articulated clamping plate (14) operable between a fully open position and a clamping position; the assembly (10) further including a retractor plate (16); the retractor plate (16) operable between a first retracted position in which it is in a vertical position and a second extended position in which it is in a horizontal position; wherein the gripper assembly (10) further includes a housing (24); **characterized in that** a vertical surface of the housing (24) facing the articulated clamping plate (14) forms the fixed plate (12).

2. The gripper of claim 1 wherein the housing (24) contains a retracting and extending mechanism for retracting and extending the retractor plate (16) between the first vertical position within the housing (24) and the second horizontal position projecting from the housing (24).

3. The gripper of claim 1 or 2 wherein the retractor plate (16) comprises an assembly of hinge elements (42) along opposing opposite sides of the retractor plate (16); the hinge elements (42) including overlapping structures (44) arranged to limit relative rotation between adjacent hinge elements between a vertical position and a horizontal position.

4. The gripper of claim 3 wherein each hinge element (42) incorporates a link (46) of a chain; the links (46) engaging sequentially with driven sprockets (32) located within the housing (24).

5. The gripper of claim 3 or 4 wherein corresponding opposing hinge elements (42) are interconnected by connecting elements to form a platform when the retractor plate is in the horizontal position.

6. The gripper of claim 4 or 5 wherein activation of the driven sprockets (32) in a retraction process draws the links (46) of each chain and the overlapping elements into vertical grooves (48) provided within the housing (24).

7. The gripper of any one of claims 1 to 6 wherein the articulated clamping plate (14) is movably mounted to a slide assembly (18) extending from an upper portion of the housing (24); an actuator (22) mounted to the slide assembly (18) moving the articulated clamping plate (14) between the fully open position and the clamping position.

8. The gripper of any one of claims 1 to 7 wherein the gripper assembly (10) is an end effector of a robot (52).

9. The gripper of any one of claims 1 to 8 wherein, in use, in the extended position, the retractor plate (16) is positioned proximate the one or more cartons of product to be lifted such that an upper surface of the extender plate is coincident with an underside of the one or more cartons of product.

10. The gripper of any one of claims 1 to 9 wherein the gripper comprises two gripper assemblies (10); each gripper assembly supported side by side from a supporting structure; the supporting structure including a robot mount for connecting the gripper to an arm of a robot (52).

11. The gripper of claim 10 wherein each gripper assembly (10) is rotatably mounted to the supporting structure; actuators at each gripper assembly (10) operable to rotate each gripper assembly about a vertical axis.

## Patentansprüche

1. - Lagenaufnahmegreifer zum Handhaben eines oder mehrerer Kartons mit Produkten, wobei der Greifer mindestens eine Greiferbaugruppe (10) beinhaltet, wobei jede Baugruppe (10) eine vertikale fixierte Klemmplatte (12) und eine vertikale angelenkte Klemmplatte (14) umfasst, wobei die angelenkte Klemmplatte (14) zwischen einer vollständig offenen Position und einer Klemmposition betreibbar ist, wobei die Baugruppe (10) ferner eine Einfahrplatte (16) beinhaltet, wobei die Einfahrplatte (16) zwischen einer ersten, eingefahrenen Position, in der sie sich in einer vertikalen Position befindet, und einer zweiten, ausgefahrenen Position, in der sie sich in einer horizontalen Position befindet, betreibbar ist, wobei die Greiferbaugruppe (10) ferner ein Gehäuse (24) beinhaltet, **dadurch gekennzeichnet, dass** eine vertikale Oberfläche des Gehäuses (24), die zu der angelenkten Klemmplatte (14) weist, die fixierte Klemmplatte (12) bildet.

2. - Greifer nach Anspruch 1, wobei das Gehäuse (24) einen Einfahr- und Ausfahrmechanismus zum Einfahren und Ausfahren der Einfahrplatte (16) zwischen der ersten, vertikalen Position innerhalb des Gehäuses (24) und der zweiten, horizontalen Position aus dem Gehäuse (24) hervorstehend enthält.

3. - Greifer nach Anspruch 1 oder 2, wobei die Einfahrplatte (16) eine Baugruppe von Gelenkelementen (42) entlang gegenüberliegenden entgegengesetzten Seiten der Einfahrplatte (16) umfasst, wobei die Gelenkelemente (42) überlappende Strukturen (44) beinhalten, die angeordnet sind, um eine Drehung benachbarter Gelenkelemente zueinander zwischen einer vertikalen Position und einer horizontalen Position einzuschränken.

4. - Greifer nach Anspruch 3, wobei jedes Gelenkelement (42) ein Glied (46) einer Kette einschließt, wobei die Glieder (46) nacheinander mit angetriebenen Ritzeln (32), die innerhalb des Gehäuses (24) angeordnet sind, in Eingriff gelangen.

5. - Greifer nach Anspruch 3 oder 4, wobei entsprechende gegenüberliegende Gelenkelemente (42) durch Verbindungselemente miteinander verbunden sind, um eine Plattform zu bilden, wenn sich die Einfahrplatte in der horizontalen Position befindet.

6. - Greifer nach Anspruch 4 oder 5, wobei die Aktivierung der angetriebenen Ritzel (32) in einem Einfahrprozess die Glieder (46) jeder Kette und die überlappenden Elemente in vertikale Rillen (48) zieht, die innerhalb des Gehäuses (24) bereitgestellt sind.

7. - Greifer nach einem der Ansprüche 1 bis 6, wobei die angelenkte Klemmplatte (14) beweglich an einer Gleitbaugruppe (18) montiert ist, die sich von einem oberen Abschnitt des Gehäuses (24) aus erstreckt, wobei ein Aktor (22), der an der Gleitbaugruppe (18) montiert ist, die angelenkte Klemmplatte (14) zwischen der vollständig offenen Position und der Klemmposition bewegt.

8. - Greifer nach einem der Ansprüche 1 bis 7, wobei die Greiferbaugruppe (10) ein Greiforgan eines Roboters (52) ist.

9. - Greifer nach einem der Ansprüche 1 bis 8, wobei im Gebrauch die Einfahrplatte (16) in der ausgefahrenen Position nahe dem einen oder den mehreren anzuhebenden Kartons mit Produkt positioniert ist, sodass eine obere Oberfläche der Ausfahrplatte mit einer Unterseite des einen oder der mehreren Kartons mit Produkt zusammentrifft.

10. - Greifer nach einem der Ansprüche 1 bis 9, wobei der Greifer zwei Greiferbaugruppen (10) umfasst, wobei jede Greiferbaugruppe Seite an Seite von einer Tragestruktur getragen wird, wobei die Tragestruktur eine Roboterhalterung zum Verbinden des Greifers mit einem Arm des Roboters (52) beinhaltet.

11. - Greifer nach Anspruch 10, wobei jede Greiferbaugruppe (10) drehbar an der Tragestruktur montiert ist, wobei Aktoren an jeder Greiferbaugruppe (10) dazu dienen, jede Greiferbaugruppe um eine vertikale Achse zu drehen.

## Revendications

1. - Pince de saisie par couches pour manipuler un ou plusieurs cartons de produits ; la pince comprenant au moins un ensemble pince (10) ; chaque ensemble (10) comprenant une plaque de serrage fixe verticale (12) et une plaque de serrage articulée verticale (14) ; la plaque de serrage articulée (14) étant actionnable entre une position entièrement ouverte et une position de serrage ; l'ensemble (10) comprenant en outre une plaque rétractable (16) ; la plaque rétractable (16) étant actionnable entre une première position rétractée dans laquelle elle est en position verticale et une seconde position étendue dans laquelle elle est dans une position horizontale ; l'ensemble pince (10) comprenant en outre un carter (24) ; **caractérisée par le fait qu'**une surface verticale du carter (24) faisant face à la plaque de serrage articulée (14) forme la plaque fixe (12).

2. - Pince selon la revendication 1, dans laquelle le carter (24) contient un mécanisme de rétraction et d'extension pour rétracter et étendre la plaque rétractable (16) entre la première position verticale à l'intérieur du carter (24) et la seconde position horizontale se projetant à partir du carter (24).

3. - Pince selon la revendication 1 ou 2, dans laquelle la plaque rétractable (16) comprend un ensemble d'éléments d'articulation (42) le long de côtés opposés de la plaque rétractable (16) ; les éléments d'articulation (42) comprenant des structures de chevauchement (44) agencées pour limiter une rotation relative entre des éléments d'articulation adjacents entre une position verticale et une position horizontale.

4. - Pince selon la revendication 3, dans laquelle chaque élément d'articulation (42) incorpore un maillon (46) d'une chaîne ; les maillons (46) s'engageant de manière séquentielle avec des pignons entraînés (32) situés à l'intérieur du carter (24).

5. - Pince selon la revendication 3 ou 4, dans laquelle des éléments d'articulation opposés correspondants (42) sont reliés entre eux par des éléments de liaison pour former une plate-forme lorsque la plaque rétractable est dans la position horizontale.

6. - Pince selon la revendication 4 ou 5, dans laquelle une activation des pignons entraînés (32) dans un processus de rétraction tire sur les maillons (46) de chaque chaîne et les éléments de chevauchement dans des rainures verticales (48) ménagées à l'intérieur du carter (24) .

7. - Pince selon l'une quelconque des revendications 1 à 6, dans laquelle la plaque de serrage articulée (14) est montée de manière mobile sur un ensemble glissière (18) s'étendant à partir d'une partie supérieure du carter (24) ; un actionneur (22) monté sur l'ensemble glissière (18) déplaçant la plaque de serrage articulée (14) entre la position entièrement ouverte et la position de serrage.

8. - Pince selon l'une quelconque des revendications 1 à 7, dans laquelle l'ensemble pince (10) est un organe effecteur d'un robot (52).

9. - Pince selon l'une quelconque des revendications 1 à 8, dans laquelle, en utilisation, dans la position étendue, la plaque rétractable (16) est positionnée à proximité du ou des cartons de produits à lever, de telle sorte qu'une surface supérieure de la plaque d'extension coïncide avec un côté inférieur du ou des cartons de produits.

10. - Pince selon l'une quelconque des revendications 1 à 9, dans laquelle la pince comprend deux ensembles pinces (10) ; chaque ensemble pince est supporté côte à côte par une structure de support ; la structure de support comprenant une fixation pour robot pour relier la pince à un bras d'un robot (52).

11. - Pince selon la revendication 10, dans laquelle chaque ensemble pince (10) est monté de manière rotative sur la structure de support ; des actionneurs à chaque ensemble pince (10) étant actionnables pour faire tourner chaque ensemble pince autour d'un axe vertical.
